# EUROPEAN PATENT APPLICATION

(11) **EP 3 525 142 A1**
(43) Date of publication of application: **14.08.2019**
(21) Application number: 18186747.4
(22) Date of filing: 01.08.2018
(51) Int. Cl.: G06Q 10/00, G06Q 10/08

(54) **INTERNET OF THINGS PACKAGING MANAGEMENT SYSTEM AND METHOD**

(30) Priority: 08.02.2018 CN 201810125691
(71) Applicant: United Thinking Industrial Co., Ltd., 518000 Shenzhen Guangdong (CN)
(72) Inventor: Sun, Tao, Shenzhen, Guangdong 518000 (CN); Lei, Yingchun, Nanshan District, Shenzhen 518000 (CN); Yang, Litang, Nanshan District, Shenzhen 518000 (CN); Chen, Yanti, Nanshan District, Shenzhen 518000 (CN); Sun, Mingwei, Nanshan District, Shenzhen 518000 (CN)
(74) Representative: Cabinet Chaillot

(57) **Abstract**

This invention discloses a kind of Internet of Things packaging management system and method, covering the logistics package, the positioning module, the information reading device, and the logistics system operation management platform and the requesting end. An information label is designed on the logistics package. The positioning module comprises the Beidou satellite positioning system, the base station and the Beidou positioning module set, wherein the Beidou positioning module set is designed on the logistics package, the Beidou satellite positioning system connects to the signal amplifier of the base station through the satellite signal network, and the signal amplifier connects wirelessly to the Beidou positioning module set. The information reading device is used for reading the information label while the requesting end is used for sending a recycling request to the logistics system operation management platform and receiving the best collection route information sent by this platform. In this way, real-time positioning of logistics package can be actualized through Satellite positioning system (with particular reference to Beidou satellite positioning system) and the information reading device to facilitate the directional collection of the described data information and the recycling of logistics package to further reduce package wastes, practice reasonable allocation of resources and decrease the operation cost.

## Description

### Technology field

This invention involves in the technology field, particularly involves in a kind of Internet of Things packaging management system and method.

### Background technology

In the logistic transportation under the current logistics system, GPS system is often adopted to position cargo container packages or logistics transportation vehicles for further tracking and monitoring of cargoes. However, the turnover frequency in the logistics transportation increases difficulty in the real-time positioning and monitoring of cargoes and occurrences of cargo loss; moreover, where the cargo is lost, it's hard to find related reason and location information. On the other hand, in most of the logistics sorting and storage procedures, the completion of information identification and redistribution through scanning the bar code or QR code on the logistics package are realized through manual work, which requires the investment of a large amount of labor cost. In addition, the uneven abilities and qualities of practitioners in logistics and express industry also result in the frequent occurrences of the loss, damage, insufficiency and replacement of packages, and the easy leakage of private information. Therefore, the way for and the realization of effective management and control over the whole logistics process are quite important for the cargo suppliers, grading dealers, logistics operators as well as the safety of user's commodities.

In addition, 30 billion express items were delivered by the logistics system of China in 2016 and it is estimated that a total of no less than 102.2 billion express items will be delivered in 2020, which indicate surging demands for carton, adhesive tapes and other logistics packages. According to incomplete statistics, about 9.922 billion corrugated cartons are used in the e-commerce market; China produces approximate 16 million tons of logistics package wastes; the proportion of packing materials in urban solid wastes is over 30%; however, the recycling rate of cartons is less than 20%, which reduces the paper packages into "package wastes". Meanwhile, the rapid increase in the demand for carton packaging results in the national average paper price increasing by over 50%; the carton use and papermaking industry are of great influences on forest and environment; thus an effective solution is urgently needed.

### Contents of the invention

This invention is designed to solve at least one problem existing in current technologies. For this purpose, this invention provides a kind of Internet of Things packaging management system and method.

This invention provides a kind of Internet of Things packaging management system which comprises the logistics package, the positioning module, the information reading device, and the logistics system operation management platform and the requesting end. The logistics package is designed with information label which is used for writing in the identity information of the logistics package; the positioning module is used for the real-time positioning of the above mentioned logistics package and comprises the Beidou Satellite positioning system, the base station and the Beidou satellite positioning module set, wherein the Beidou positioning module set is designed on the logistics package, the Beidou satellite positioning system connects to the signal amplifier of the base station through the satellite signal network, and the signal amplifier connects wirelessly to the Beidou positioning module set; the information reading device is used for reading the information label and providing the location information of this device; the logistics system operation management platform is used for receiving the identity information sent by the information reading device and the location information of this device, and also used for receiving the real-time location information of the logistics package sent by the positioning module and conducting data analysis and disposal of the identity information and the real-time location information based on the recycling request to gain the best collection route information for the idle logistics package; the requesting end is used for sending a recycling request to the logistics system operation management platform and receiving the best collection route information sent by this platform.

Preferably, the information reading device includes information input module, reading module, Beidou positioning module and wireless communication module. The information input module is used for inputting the user information, commodity information, and logistics address information; the reading module is used to read the identity information; the Beidou positioning module is used for conducting real-time position of the information reading device; and the wireless communication module connects to the logistics system operation management platform.

Preferably, the information label is RFID label and the reading module is RFID reader.

Preferably, the information reading device is designed at logistics conveyances, logistics relay warehouse, and collection terminal. The logistics conveyances and the collection terminal are designed with low-frequency RFID reader; the logistics relay warehouse is designed with high-frequency RFID reader; the collection terminal is designed with package storing modules for the storage of idle logistics packages recycled.

Preferably, the requesting end includes the mobile client terminal and the collection terminal. The mobile client terminal can also be used to deliver sending request to the logistics system operation management platform and receive the feedback from this platform; the collection terminal can also be used to deliver sending request to the logistics system operation management platform and receive the feedback from this platform.

Preferably, the logistics package includes the packaging-case main body and agraffe. The side plate of the packaging-case main body can be folded outward; the bottom plate of the packaging-case main body can be folded concavely inward; the top plate of the packaging-case main body is designed with the agraffe.

Preferably, the logistics package is made of recycled plastic materials.

Preferably, the logistics packages are in modular dimensions and logistics packages with different dimensions can form into stable stacked combinations.

This invention provides a kind of Internet of Things packaging management method covering:
the labelling of the logistics package to write identification information of the logistics package into the information label;
the positioning of the logistics package on which the Beidou positioning module set is designed, effects real-time positioning of the logistics package through the Beidou satellite positioning system, and sends the real-time location information of the logistics package to the logistics system operation management platform;
the binding of information wherein the information reading device reads the information of the information label, sends the identity information to the logistics system operation management platform, and conducts matched binding between the identification information and real-time location information; and
optimization of receiving route wherein based on the recycling request sent by the requesting end, the logistics system operation management platform conducts analysis and disposal of the identification information and location information received to gain the best collection route information of the idle logistics package and sent the best collection route information to the requesting end.

Preferably, when the requesting end delivers sending request to the logistics system operation management platform, based on the sending request, this platform will identify if there is any idle logistics package around the location of the sender to match with the dimensions of the cargo.

Preferably, the optimization of the receiving route covers the following aspects:
S100: preset the initial parameter and set the longest operation time as T0, the mapping relation between the logistics transportation personnel and the receiving address as N1, the exchange probability as PI and the variation probability as Q1;
S101: produce randomly a series of initial values as the parent based on the distribution areas of logistics transportation personnel;
S102: calculate the best route of each logistics transportation personnel within their distribution area through tabu search algorithm and add up the sum of all logistics transportation routes;
S103: Calculate if the time surpasses the longest operation time T0, transfer to S106 if yes, and transfer to S104 if no;
S104: Conduct exchange operation on individuals within the group based on the exchange probability P1;
S105: Conduct variation operation on individuals within the group based on the variation probability Q1 and jump to S102;
S106: Compare the current logistics operation route sum with the best historical route sum, adopt the current operation result and replace the best historical route if the current logistics operation route is superior to the best historical route, otherwise, adopt the best historical route.

Preferably, the optimization of the receiving route also covers the following aspects:
S107: Receive new recycling request;
S108: The logistics system operation management platform waits for a spell of time T1;
S109: Position the logistics transportation personnel or vehicles and initialize the locations of the logistics transportation personnel or vehicles;
S110: The logistics system operation management platform conducts a new round of calculation of uncollected idle logistics packages.

Preferably, the Internet of Things packaging management method includes also the optimization of logistics routes between urban areas; the optimization of logistics routes between urban areas covers also the following aspects:
S200: Preset the initial parameter, and set the longest operation time as T2, the mapping relation between vehicles and logistics relay warehouses as N2, the exchange probability as P2 and the variation probability as Q2;
S201: Produce randomly a series of initial values of the mapping relation between the vehicles and the logistics relay warehouses as the parent;
S202: Calculate the best route of each vehicle between the dispatching warehouse and the receiving warehouse through tabu search algorithm and add up the total transportation cost of all vehicles;
S203: Calculate if the time surpasses the longest operation time T2, transfer to S206 if yes, and transfer to S204 if no;
S204: Conduct exchange operation on individuals within the group based on the exchange probability P2;
S205: Conduct variation operation on individuals within the group based on the variation probability Q2 and jump to S202;
S206: Compare the total transportation cost of the current vehicle with the best historical total transportation cost; adopt the current operation result, replace the best historical total transportation cost and transfer to S208 if the total transportation cost of the current vehicle is superior to the best historical total cost; otherwise, transfer to S207;
S207: Transfer to S201 if the number of vehicles decreases by 1;
S208: Output the best vehicle number and the total operation cost.

The Internet of Things packaging management system and method provided by this invention, on the basis that the logistics package is designed with the Beidou positioning module set and the real-time positioning of logistics package is actualized through the Beidou satellite positioning system during the logistics transportation, can realize the directional collection of data information and the recycling of logistics packages to decrease further package wastes, as well as optimize the receiving route, practice reasonable resources allocation and reduce operation cost.

Additional aspects and the advantages of this invention will be given partially in the following description, part of which becomes obvious in the following description or be understood through the practice of this invention.

### Description with diagrams

The above and/or additional aspects and advantages of this invention will become obvious and easy to understand through the description of the execution mode by the following diagrams, wherein:
Figure 1 is the structure diagram of the Internet of Things packaging management system based on this invention.
Figure 2 is the solid diagram of the logistics package of the Internet of Things packaging management system based on this invention.
Figure 3 is the folding state diagram of the logistics package of the Internet of Things packaging management system based on this invention.
Figure 4 is another solid diagram of the logistics package of the Internet of Things packaging management system based on this invention.
Figure 5 is the solid diagram of the collection terminal of the Internet of Things packaging management system based on this invention.
Figure 6 is a flow diagram of the receiving route optimization of the Internet of Things packaging management method based on this invention.
Figure 7 is another flow diagram of the receiving route optimization of the Internet of Things packaging management method based on this invention.
Figure 8 is the flow diagram of the optimization of logistics routes between urban areas of the Internet of Things packaging management method based on this invention.

### Specific mode of execution

The execution mode of this invention is described below and example of the execution mode is demonstrated in the diagrams, wherein a mark number refers consistently throughout to the same or similar component, or a component of same or similar functions. The following description of the execution mode through diagram is exemplary and only used to explain this invention, instead of being understood as restrictions on this invention.

In the description of this invention, it needs to be understood that directions or positions indicated by such terms as "center", "longitudinal", "traverse", "length", "width", "thickness", "on", "under", "forward", "backward", "left", "right", "vertical", "horizontal", "top", "bottom", "inside", "outside", "clockwise", and "anticlockwise" are based on diagrams, which is to facilitate the description of this invention and the simplification of the description, instead of indicating or implying that the designated device or component must be in a specific direction and constructed and operated in a specific direction. Thus, these terms cannot be understood as restrictions on this invention. In addition, the terms "first" and "second" are only used for descriptive purposes, and should not be understood as indicating or suggesting the relative importance, or implying the quantity of specified technical features. Therefore, the features defined by "first" and "second" can explicitly or implicitly include one or multiple features. In the description of this invention, "multiple" refers to two or above two, unless otherwise explicitly defined.

In the description of this invention, it needs to clarify that, unless otherwise explicitly specified and defined, the terms of "install", "joined" and "connection" should be understood in a broad sense, such as it can be fixed connection, dismountable connection or integral connection; it can be mechanical connection, also electric connection, or mutual communication; it can be joined directly, also indirectly through intermediaries, can be the internal communication between two components or the interaction of two components. Ordinary technical personnel in this field can understand the concrete meanings of the terms above in this invention according to specific circumstances.

In this invention, unless otherwise explicitly specified and defined, the first feature "on" or "under" the second feature includes the direct contact between the first feature and the second feature, also the indirect contact between the first feature and the second feature through another feature. Moreover, the first feature "above", "over" and "on" the second feature includes the first feature right above and slantingly above the second feature, or merely indicates the first feature being higher than the second feature. The first feature "below", "under" and "beneath" the second feature includes the first feature right above and slantingly above the second feature, or merely indicates the first feature being lower than the second feature.

The disclosure following provides many different execution modes or examples for the implementation of different structures of this invention. To simplify the disclosure of this invention, the components and configurations of specific examples are described following. Certainly, they are merely examples and are not intended to restrict this invention. In addition, this invention can repeat the reference numbers and/or reference letters in different examples. This kind of repetition is for the purposes of simplification and clarification, and does not indicate a certain relation among all execution modes and/or configuration. Moreover, this invention provides examples of various specific processes and materials, but ordinary technical personnel in this field can recognize the application of other processes and/or other materials.

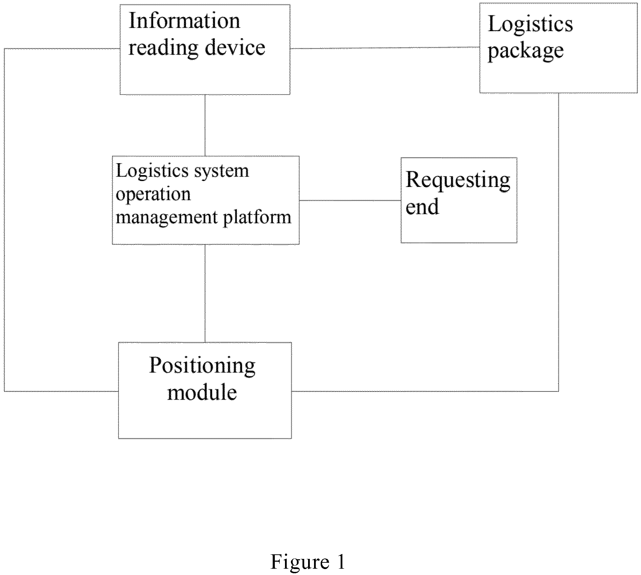

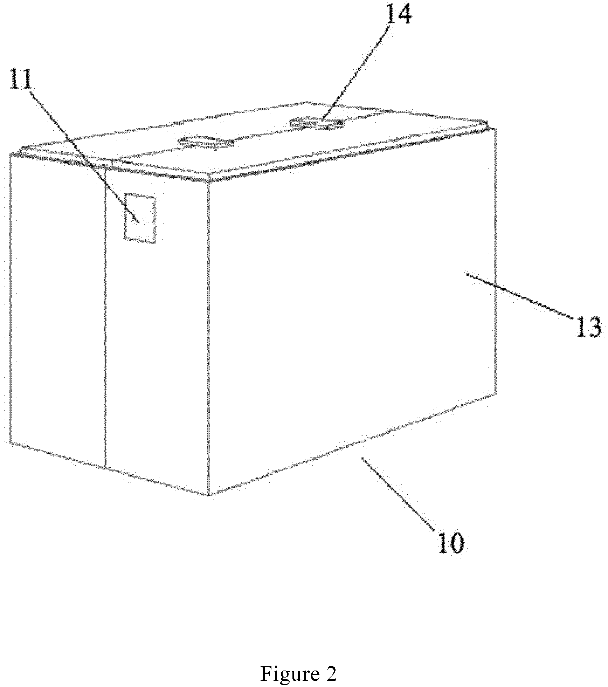

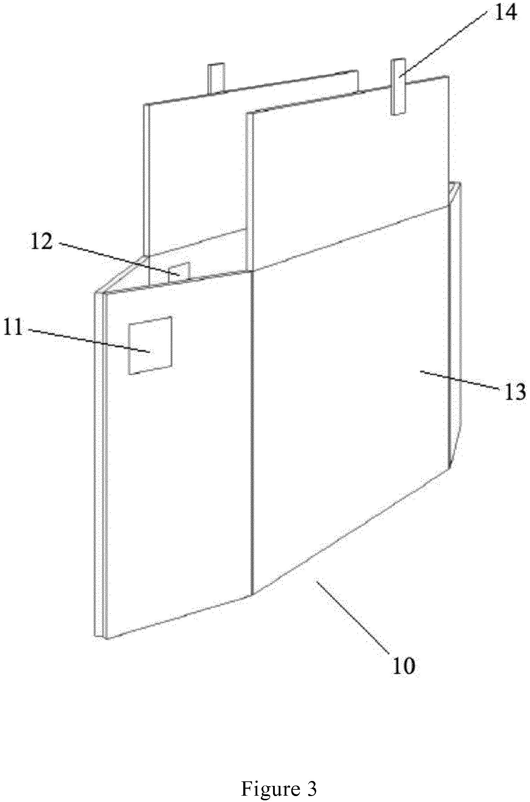

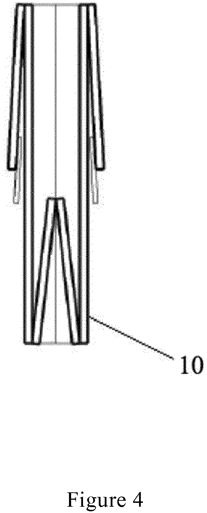

Please refer to Figure 1 to Figure 4 for the execution modes of this invention. This invention provides a kind of Internet of Things packaging management system which comprises the logistics package 10, the positioning module, the information reading device, and the logistics system operation management platform and the requesting end. The logistics package 10 is designed with information label which is used for writing in the identity information of the logistics package 10; the positioning module is used for the real-time positioning of the logistics package 10 and comprises the Beidou Satellite positioning system, the base station and the Beidou satellite positioning module set, wherein the Beidou positioning module set is designed on the logistics package 10, the Beidou satellite positioning system connects to the signal amplifier of the base station through the satellite signal network, and the signal amplifier connects wirelessly to the Beidou positioning module set; the information reading device is used for reading the information label and providing the location information of this device; the logistics system operation management platform is used for receiving the identity information sent by the information reading device and the location information of this device, and also used for receiving the real-time location information of the logistics package 10 sent by the positioning module and conducting data analysis and disposal of the identity information and the real-time location information based on the recycling request to gain the best collection route information for the idle logistics package 10; the requesting end is used for sending a recycling request to the logistics system operation management platform and receiving the best collection route information sent by this platform.

The Internet of Things packaging management system provided by this invention, on the basis that the logistics package 10 is designed with the Beidou positioning module set and the real-time positioning of logistics package 10 is actualized through the Beidou satellite positioning system during the logistics transportation, can realize the directional collection of data information and the recycling of logistics package 10 to decrease further package wastes, as well as optimize the receiving route, practice reasonable resources allocation and reduce operation cost.

In this execution mode, the requesting end includes the mobile client terminal and the collection terminal 15. The mobile client terminal can also be used to deliver sending request to the logistics system operation management platform and receive the feedback from this platform; the collection terminal 15 can also be used to deliver sending request to the logistics system operation management platform and receive the feedback from this platform.

In this execution mode, the logistics package 10 is in modular dimensions and comprises packaging-case main body 13 and agraffe 14. The packaging-case main bodies 13 are in different modular dimensions to realize a stable stacked combination of logistics packages 10 under different dimensions in the transportation, assembly, storage and distribution links to optimize space utilization. The side plate of the packaging-case main body 13 can be folded outward and its bottom plate can be folded concavely inward; the top of the packaging-case main body 13 comprises two plates; the top plate of the packaging-case main body 13 is designed with the agrafe 14, which can be closed and fixed to help the packaging-case main body 13 form a stable cube packaging-case for the containing of cargoes under different dimensions, and can also be opened to allow the packaging-case main body 13 to be folded into a block with a thickness less than 10cm for the further storage space saving of the logistics package 10 during the recycling, storage and transportation process. The packaging-case main body 13 is designed with slots 12 to fix the information labels and the Beidou positioning module set. The logistics package 10 can be made of plastic materials. Preferably, the logistics package 10 can be made of a mixed material with 20% recycled PET material and 80% new PET material; this kind of mixed material possesses properties of high crush resistance, high temperature resistance, damp proof and water resistance, etc. and can be under cycle use for many times; one piece of this logistics package 10 made of the mixed material can be under cycle use for 1000 times; the packaging-case main body 13 is designed with composite bed of buffer performance to better prevent the cargo from damage during the transportation.

This utility-model logistics package 10 is made of materials of creep resistance, endurance resistance, rub resistance and high toughness, features little attrition and high hardness, and can be recycled for many times; it replaces the traditional one-off paper package and allows the positioned and recycled logistics package 10 to be applied in the Internet of Things packaging management system for the realization of a sustainable cyclical pattern; the logistics package 10 can be recycled to make new logistics packages, which is more environment-friendly and avoids resource waste. Compared with the traditional paper package, the logistics package 10 can be folded into a block with a thickness less than 10cm, which facilitates the storage and saves space.

Certainly, the logistics package 10 is not limited to the execution mode above and can be realized in other structures, for example, the side plate of the packaging-case main body can be folded inward, the bottom plate can be folded outward and the top plate can comprise four plates, or the logistics package 10 can be spliced by multiple plates and then fixed by fixed parts. The logistics package 10 can be shaped in not only a cube, but also a triangular prism, cuboid or other shapes convenient for stacking, such as L-shape. The logistics package 10 can be made of recycled plastic materials, but also totally new plastic materials or recycled carton, etc.

Preferably, the information label is RFID label which is provided with a unique identification code for the speedy RFID of the logistics package 10 during the transportation; the identification code information in the RFID label is under the code system of the EAM, and covers the identification information of the logistics package 10 which includes the independent information code and the shared information code; the independent information code records the category, dimensions and texture information of the logistics package 10; the shared information code records asset owner's code and asset category code; through arrangement and combination, the codes of corresponding information form into a unique serial number which matches with a certain logistics package 10 and restored in the logistics system operation management platform; the matching and correlation between the logistics package 10 and the cargoes within the package can be realized through the binding of information in the logistics system operation management platform; the cargo information includes information about receiver and sender as well as about the cargo, which is input by the user at the mobile client terminal and stored in the logistics system operation management platform through the Internet.

The Beidou positioning module set built in the logistics package 10 can realize real-time accurate positioning of the logistics package 10 through the Beidou satellite positioning system or GPS positioning and navigation system, and deliver the real-time location information of the logistics package 10 to the logistics system operation management platform; the Beidou positioning module set can adopt the GNSS baseband radio frequency integrated navigation chip, can support passive antenna and BDS/GPS positioning, dual-system joint positioning and single-system independent positioning modes, and can be designed with Ultra-sense band base. In the Beiduo positioning module set, the multi-bit coding method integrating Arabic numerals and English letters is applied to form the unique Beidou positioning module set code; the Beidou positioning module set code and the RFID label information of logistics package 10 are mapped and bound one to one in the logistics system operation management platform for the realization of the matched binding between the identification information of logistics package 10 and the real-time location information of the logistics package 10. The outside of the packaging-case main body 13 is also stamped with a unique identification QR code 11 which can be used to assist manual scanning and identify package information during the circulation of the logistics package 10; the identification information of both the QR code 11 and RFID label corresponds uniquely to the integral identification code information of a certain logistics package; the QR code graphics is made on the outside of the packaging-case through stamp or ink-jet printing, replaces the traditional paper-printed stuck QR code 11 and allows to be used for many times.

Certainly, the logistics package 10 is not limited to the structures described above and can be in other structures to pack cargoes. The Beidou positioning module set can support not only GNSS baseband radio frequency integrated navigation chip, but also other Beidou satellite positioning system chips; the logistics package 10 can be made of not only the materials described above, but also other materials or in other mixing ratio.

In this execution mode, the information reading device includes the information input module, the reading module, the Beidou positioning module and wireless communication module; the information input module is used for inputting the user information, cargo information and logistics address information; the reading module is used for reading the identification information; the Beidou positioning module is used for the real-time positioning of the information reading device; the wireless communication module connects to the logistics system operation management platform. Preferably, the reading module is RFID reader and the wireless communication module is WiFi module and/or GPRS module. The information reading device possesses the following functions: to enter the logistics information and cargo information, conduct data reading and collection on RFID label of logistics package 10, deliver the data read and collected to the logistics system operation management platform through wireless signals. The information reading device will be installed in the package circulation links of the logistics package 10; its specific installation sites include: logistics conveyances, AGV, exit and entrance to the logistics relay warehouse, warehouse shelf and collection terminal 15, wherein the package circulation links cover the cargo packing, discharge from warehouse, cargo loading, cargo distribution, cargo unloading, cargo in-warehouse, cargo discharging, package ex-warehouse, package loading, package unloading and package in-warehouse. All the location information of the information reading device during the package circulation can be read, stored in the logistics system operation management platform to facilitate the back-stage management. The information reading device installed in different package circulation links share similar basic functions, but support an RFID reader of different identification frequency based on the different identification demand range for the RFID. The information reading device installed on logistics conveyances, AGV, warehouse shelf and collection terminal 15 adopts 2.4GHZ or 5.8GHZ low-frequency RFID reader for the accurate identification of identification information in the RFID label on the logistics package 10 within short distance; the information reading device installed at the exit and entrance to the logistics relay warehouse adopts 850MHZ-950MHZ high-frequency RFID reader for the rapid identification of the identification information in RFID label on the logistics package 10 within long distance.

Moreover, the different modules of the information reading device can be selected independently by the user to generate an information reading device for different functional scenes. Wherein, the information input module possesses the input function through touch screen keyboard and the cargo information selection function; the keyboard input function supports standard keyboard screen input and can be used by the sender in his/her order placing to enter user information and logistics address information; the cargo information selection function is based on the cargo type code database stored in the logistics system operation management platform, and the sender enters the cargo's quantity, weight and information keywords and searches corresponding code of the cargo in the cargo type code database through WiFi module or GPRS module. Wherein, the cargo code follows the multi-bit digital code compiled on the basis of the GB7635-87 national standard of the *National Classification and Codes of Industrial and Agricultural Products (Commodities, Goods and Materials)*; after the selection and confirmation by the sender, the cargo code is uploaded to the logistics system operation management platform through the WiFi module or GPRS module in the information reading device and forms data binding with the user information and logistics address information through the logistics system operation management platform; the identification information of the RFID label on corresponding logistics package 10 is matched and bound to generate corresponding logistics order information; the sender will be informed of the order cost information through the information input and display modules; the logistics order cost is in proportional relation with the cargo weight and logistics distance; where the cargo has a high value, the sender can select corresponding value-insured service. Where the sender is a personal user, the sender can input user information and logistics address information, select corresponding code of the cargo, and take a photo of the cargo to upload to the logistics system operation management platform through related procedures of a mobile client terminal (such as mobile phone and tablet PC); the logistics system operation management platform analyzes and processes the data through the image processing system, and then binds the cargo code information, user information, logistics address information and RFID label information of corresponding logistics package 10. The RFID reader uses an ultra-high frequency RFID reader with a frequency range of 902∼928Mhz whose reading and writing range is 0 to 30 meters; this reader can read 300 pieces of RFID label information simultaneously in the package circulation and stay places, realizes reading one time per second, and uploads the collected code information of the RFID label to the logistics system operation management platform through the WiFi module and the GPRS module.

Since the identification information in the RFID label on the logistics package 10 can form a unique binding relationship with its corresponding cargo and logistics information through the logistics system operation management platform, and can be transmitted to the logistics system operation management platform after the radio frequency identification by the information reading device, the logistics system operation management platform can calculate the best sorting route and package stacking relationship of the cargo and logistics package 10 based on the logistics direction information and cargo weight information through information collection and data analysis in the package circulation links. When the logistics package 10 (including logistics packages 10 containing cargoes and empty cases) arrives at the logistics relay warehouse and is sorted, the sorting route is divided into two levels: the first level is based on the primary transportation direction information of the asset, which includes the geographical information about the domestic region, province and city, and is used for the first sorting of the conveyor belt in the sorting process of logistics relay warehouse; the second level is based on the detailed transportation information of the asset and the cargo weight information which is used to guide the second sorting of the logistics sorting process, and the stacked loading.

When the logistics package 10 containing cargoes or the empty case arrives at the logistics relay warehouse, the information reading device of the logistics relay warehouse conducts radio frequency identification of identification information in RFID labels on all stored logistics packages 10, and uploads the information through the WiFi module or the GPRS module to the logistics system operation management platform. The logistics system operation management platform acquires the identification information in the RFID label of the logistics package 10, and analyzes and calculates the information based on the primary transportation direction information; after organizing and grouping, the identification information in the RFID labels of same primary transportation information is delivered back to the computers at the logistics relay warehouse to form into computer instruction which further controls conveyor belt in the logistics relay warehouse to complete the first sorting according to the primary transportation direction information. The RFID reader is installed on the initial end of the conveyer belt, can identify the identification information in the RFID label on the logistics package 10, and can control the logistics package 10 to fell into the corresponding package collection warehouse; the package collection warehouses are classified according to the primary transportation directions and equipped with the information reading device. After the logistics package 10 containing cargoes or the empty case enters the package collection warehouse, the information reading device of the package collection warehouse conducts radio frequency collection on the identification information in the RFID label on the logistics package 10, and sends it to the logistics system operation management platform; the logistics system operation management platform analyzes and calculates the acquired identification information of the RFID label based on the detailed transportation direction information and cargo weight information, and order the RFID label information corresponding to cargoes within the same group in a sequence of weight descending; the grouping and label ordering information generated through the logistics system operation management platform is delivered to the logistics relay warehouse to form computer instructions to control the mechanical arm system near the package collection warehouse to complete second sorting. The mechanical arm is equipped with the RFID reader which can conduct radio identification on the identification information of RFID label on the logistics package 10 after the package's detailed sorting on the conveyer belt of the package collection warehouse; the mechanical arm can complete the stacking of logistics package 10 containing cargoes according to the computer instructions of ordering packages from up to down in a sequence of weight ascending and dimensions ascending; the stacked logistics packages 10 are moved to the loading holder by the mechanical arm to be ready for the cargo loading link.

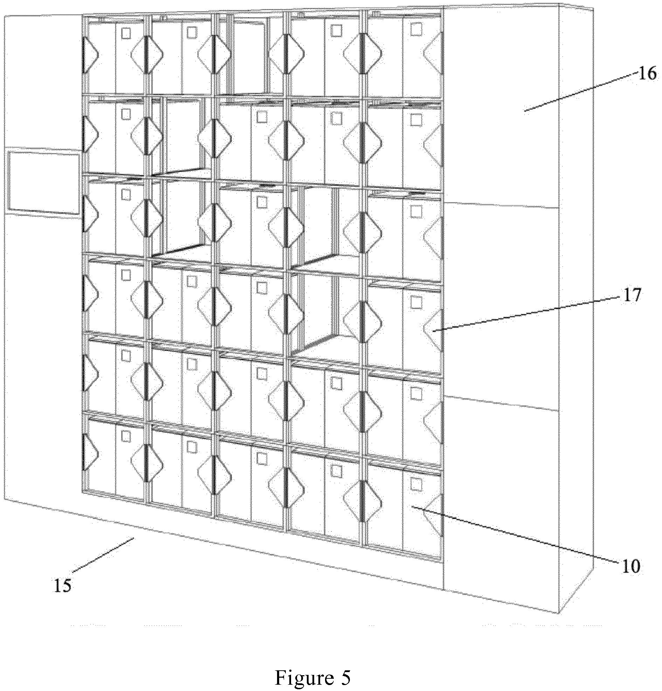

Please further refer to Figure 5 for the self-help package receiving and collecting by the user and the temporary storage of logistics packages 10 at the collection terminal 15. The collection terminal 15 includes: package cabinet, information reading and writing device, electronic lock baffle 17, package storing module 16. The collection terminal 15 is installed in public areas of intensive package receiving, such as communities and working units; the package cabinet is a stable metal frame, the dimensions of which support the modular dimensions of logistics packages 10. The information reading and writing device includes the information inputting and displaying modules, RFID reader, Beidou positioning module, WiFi module and GPRS module. The electronic lock baffle 17 is interconnected electronically to the logistics system operation management platform and the information reading and writing equipment to control the withdrawal and storage of logistics packages 10. The package storing module 16 is divided into three levels of large size, medium size and small size, each level corresponding to logistics package 10 of different folded sizes; the package storing module 16 can accommodate simultaneously one hundred pieces of folded logistics packages 10; the opening and closing of package storage module 16 are interconnected electronically to the logistics system operation management platform and the information reading and writing device of the collection terminal 15.

The Internet of Things packaging management method provides two distribution modes: 1. Logistics packages 10 containing cargoes or idle logistics packages 10 are distributed to the collection terminal as required by the user and the user conducts self-help withdrawal of the package or self-help delivery; 2. Logistics packages 10 containing cargoes or idle logistics packages 10 are dispatched to the logistics information address of the receiver and sender. Details are as follows:
Delivery: When the logistics order is generated, the logistics system operation management platform combines and converses the information about the user, logistics address, cargo and logistics package 10 in the logistics order into order QR code information through data processing, and sends the information to the mobile client terminal of the receiver and sender; the receiver and sender can inquire and track the real-time location information of the order package through scanning the QR code information with mobile client terminal; when the package arrives at the logistics relay warehouse near the receiver's address, the platform transmits the delivery selection instruction to the mobile client terminal, and the receiver can select through the mobile client terminal delivering the package home or delivering the package to a collection terminal 15 near the receiving address. If the user selects delivering the package home, the logistics system operation management platform will not change original logistics delivery address of the package and transmit the delivery to corresponding handheld information reading device to inform the logistics delivery address of the order package; the handheld information reading device includes low-frequency RFID reader, scanning module and Beidou positioning and navigation module; When the package is delivered home and the receiver is to confirm the delivery, RFID information reading device can be used to scan the order QR code information on the receiver's mobile client terminal; if the QR code information matches this package's RFID label information stored in the logistics system operation management platform, the package delivery is confirmed; after the user confirms the delivery of the package, the user can select recycling the logistics package 10 then or keeping the logistics package 10 case; if selecting recycling the logistics package 10 case, the user needs to pay case-keeping deposit to corresponding handheld information reading device, and this deposit will be refunded to the user upon the completion of another package delivery with this logistics package 10.

If the user selects delivering the package to a collection terminal 15 near the receiver's address, the user needs to pay a certain amount of package storage deposit through the mobile client terminal. After receiving the instruction, the logistics system operation management platform will bind the RFID label information of the logistics package 10 and location information of the collection terminal 15 selected by the user, and transmit the delivery instruction to corresponding handheld information reading device; according to the delivery instruction, the package is delivered to a collection terminal 15 near the receiver's address; after the logistics package 10 arrives at the collection terminal 15, the information reading device at the collection terminal 15 conducts RFID of the RFID label information on the arrived logistics package 10, and transmits the information to the logistics system operation management platform; the logistics system operation management platform calculates the information of cabinet matching the dimensions of the arrived package through analyzing the location information, empty cabinet information at the collection terminal 15 as well the RFID label information of the logistics package 10, and sends the information to the information reading device at the collection terminal 15; The information reading device of the collection terminal 15 scans the stamped QR code 11 on the outside of the logistics package 10 one by one; the QR code 11 is uploaded to the logistics system operation management platform; a specific cabinet will be matched through data processing and the electronic lock baffle 17 corresponding to this cabinet will automatically open; when the electronic lock baffle 17 is closed after the package is stored, the package arrival instruction is uploaded to the logistics system operation management platform through the information reading device of the collection terminal 15, and the platform transmits the arrival information to the mobile client terminal of the receiver; the arrival information include location of the collection terminal 15 where the package is, and delivery notice; when the receiver picks up the package, the information reading device at the collection terminal 15 scans the QR code 11 received at the mobile client terminal; the QR information is uploaded to the logistics system operation management platform through the information reading device; after receiving the QR information, the logistics system operation management platform will match the lock opening instruction of corresponding cabinet to the information reading device, and open the electronic lock baffle 17 of the package's cabinet through electronic control; after the baffle is opened, the receiver can select taking away only the cargo and leaving behind the logistics package 10 case, or taking away both the cargo and the logistics package 10 case; if the user selects leaving behind the logistics package 10 case, the user takes away the cargo and closes the electronic lock baffle 17, and recycles the folded logistics package 10 case to the package storing module 16 of the collection terminal 15; if the RFID information reading device can still collect the RFID label information of corresponding order within 24 hours after the electronic lock baffle 17 is closed, the package storage deposit paid by the user before will be fully refunded to the account of the mobile client terminal; if the user selects taking away the logistics package 10, the user takes away the package and closes the electronic lock baffle 17; the package storage deposit paid by the user before will not be refunded to the account of the mobile client terminal until the user completes the reusing of the package next time.

Package sending: When the sender places an order, the logistics system operation management platform calculates automatically if there is any existing empty case matching the dimensions of the cargo near the sender's address based on the sender's address information and cargo information in the generated order; if there is no empty case, the sender will be informed to wait for door-to-door pick up; if there is empty case, the identification information on the RFID label of a corresponding empty case and the sending order information of the user will be matched to complete binding.

When door-to-door pick up is implemented, the logistics system operation management platform performs data analysis in advance, and the dimensions of the matched empty package case will be sent to the information reading device near the corresponding pickup address through the logistics system operation management platform, and if there is any idle logistics package 10 of such dimensions in the logistics vehicles or at the collection terminal 15 near the location of the sender will be notified will be informed; after the empty case is obtained, the address information of the sender will be acquired through handheld information reading device for door-to-door pickup; after the encasement in the door-to-door pickup, the handheld information reading device is used to collect the RFID label information on the logistics package 10, and further uploads the information to the logistics system operation management platform; then, the binding of the RFID label information of the logistics package 10 with the order is immediately confirmed, namely, confirming the completion of door-to-door pickup.

When the sender has a self-help package sending, the logistics system operation management platform analyzes and matches automatically the RFID label information of the idle logistics package 10 matching this order at the collection terminal 15 near the sender's address, and the empty cabinet available for storage, based on the sender's address information and the cargo information in the generated order; after successful matching, this platform transmits the cabinet opening code to the mobile client terminal of the sender and informs the sender of the location information of the collection terminal 15 for the package sending; the sender arrives at the collection terminal with the cargo, and input the cabinet opening code through the information reading device at the collection terminal 15; the door of the cabinet storing the matched idle logistics package 10 will be opened automatically, and correspondingly, the matched idle logistics package 10 will be pushed out; meanwhile, the electronic lock baffle of the empty cabinet corresponding to the cargo dimensions will be opened; only until the sender encases the cargo, puts the encased cargo into the space opened by the baffle, and pays corresponding order, the corresponding electronic lock baffle 17 can close; when the electronic lock baffle 17 closes, the sender completes self-help cargo sending.

The Beidou satellite positioning system connects to the signal amplifier sited at the signal base station through the satellite signal network; the signal amplifier connects wirelessly the Beidou positioning module set in the logistics package 10 and the Beidou positioning module in the signal reading device, and collects the real-time positioning data of logistics package 10 during its outdoor logistics transportation. The signal amplifier functions simultaneously as the reference and enhancement signal station of the Beidou satellite positioning system; under the differential positioning principle, the Beidou positioning system calculates the position of the signal amplifier and its positional deviation; according to the calculated positional deviation, the ground area is divided into square areas, the side length of which is usually 5 kilometers; according to the deviation calculated from the signal amplifier and the distance between the signal amplifier and the divided area, the positional deviation amount in each square area can be calculated; the Beidou positioning module set of the logistics package 10 and the Beidou positioning module of the signal reading device can simultaneously acquire the Beidou satellite signal to calculate the positions of the Beidou positioning module set and the Beidou positioning module, and to perform high-precision calculation according to the positional deviation of the signal amplifier. The signal amplifier transmits the processed real-time location information of the logistics package 10 through a wireless or wired network to the logistics system operation management platform; the logistics system operation management platform generates cargo transportation logistics data matching to the logistics package 10 based on the stored geographic information database. The logistics system operation management platform connects to the Internet which interacts with the GPRS internet and connects to the mobile client terminal, and is used for receiving and sending the application and feedback of the cargo positioning data information. The identification information of the RFID label uploaded through the information reading device is bound with the location information of the information reading device stored in the database of the logistics system operation management platform; identification, positioning and tracking of any logistics package 10 and corresponding cargo in the whole logistics process are realized through combination with the Beidou Satellite positioning system; after receiving the identification information of the RFID label transmitted by the information reading device, the logistics system operation management platform conducts data analysis and processing, and compare the information with that received last time, and responds, disposes and updates timely the state information produced by the logistics package 10 and the corresponding cargo in the package circulation links. If the data received by the logistics system operation management platform does not match the preset data, the logistics system operation management platform will issue a faulty cargo alarm. Meanwhile, based on the information receiving and sending functions of the Beidou satellite, where emergencies occur on the cargo during the logistics transportation, the alarming signal can be transmitted to the logistics system operation management platform through the information reading device, and both the receiver and the sender will receive the alarm signal through the mobile client terminal.

When the logistics package 10 is located within indoor space (logistics relay warehouse), the low-frequency RFID information reading device installed on the corresponding shelf reads a preset range of the RFID label information of the logistics package 10 that allows radio frequency collection, and transmits the collected label information to the logistics system operation management platform through radio network or the wireless network; the logistics system operation management platform can automatically match the collected RFID label information with the stored location information of the corresponding information reading device to realize the relatively accurate position of the logistics package 10 within the indoor space.

This invention provides a kind of Internet of Things packaging management method covering:
the labelling of the logistics package 10 to write identification information of the logistics package 10 into the information label;
the positioning of the logistics package 10 on which the Beidou positioning module set is designed, effects real-time positioning of the logistics package 10 through the Beidou satellite positioning system, and sends the real-time location information of the logistics package 10 to the logistics system operation management platform;
the binding of information wherein the information reading device reads the information of the information label, and sends the identity information to the logistics system operation management platform; and
optimization of receiving route wherein based on the recycling request sent by the mobile client terminal, the logistics system operation management platform conducts analysis and disposal of the identification information and location information received to gain the best collection route information of the idle logistics package 10 and sent the best collection route information to the mobile client terminal.

The Internet of Things packaging management method provided by this invention, on the basis that the logistics package 10 is designed with the Beidou positioning module set and the real-time positioning of logistics package 10 is actualized through the Beidou satellite positioning system during the logistics transportation, can realize the directional collection of data information and the recycling of logistics package 10 to decrease further package wastes, as well as optimize the receiving route, practice reasonable resources allocation and reduce operation cost.

In this execution mode, when the requesting end issues sending request to the logistics system operation management platform, based on the sending request, the logistics system operation management platform calculates if there is any logistics package 10 matching the cargo dimensions near the address of the sender.

In this execution mode, the Internet of Things packaging management method includes optimization of receiving route, optimization of delivery route and optimization of logistics routes between urban areas, for further improves the empty vehicle usage rate for logistics conveyances as well as the asset circulation route. Optimization of receiving route: The optimization of receiving route refers to the optimization algorithm where the logistics system operation management platform allocates cargo picking address and plans the best collection route after this platform obtains the order of the sender, or the user transmits a request for recycling the idle logistics package 10 on the mobile client terminal, or the user transmits a request for recycling logistics package 10 on the collection terminal 15. The best collection route refers to the planned collection route of the shortest total mileages for the whole system, and to the collection route of the shortest distance for an individual operational staff. If the cargo picking address is allocated without any control and planning of the logistics transportation, this route optimization algorithm is abstracted to VRP (Vehicle Routing Problem) which has been testified as NP-hard. Generally speaking, the working areas of the logistics transportation will be divided to improve familiarity of staffs to corresponding areas and further increase the package collection efficiency. The following optimization algorithm implements area division for the logistics transportation, but the transportation and delivery can be operated in neighboring areas (logistics transportation personnel in neighboring areas can collect mutually the cargoes or idle logistics packages 10 of each other); meanwhile, its evolutionary computation is implemented within a certain time, thus the optimal solution gained is not necessarily the global optimal solution. The optimization algorithm assumes that the starting position of the courier is a certain fixed one, such as the residence or storage center of the logistics transportation personnel, which conforms to the actual operation situation of the current express delivery industry.

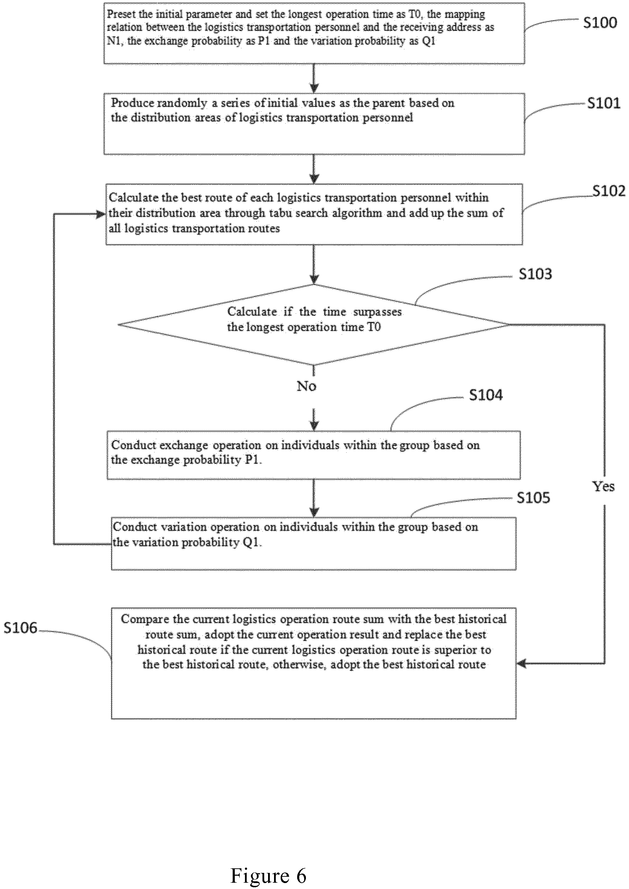

Please refer to Figure 6; before the receiving operation of the logistics transportation personnel, the logistics system operation management platform acquires all the receiving addresses in that day, allocates the receiving addresses for the courier through the genetic algorithm, and conducts the with-calculation of the receiving route through tabu search algorithm; the workflow of the algorithm is as follows:
S100: preset the initial parameter and set the longest operation time as T0, the mapping relation between the logistics transportation personnel and the receiving address as N1, the exchange probability as PI and the variation probability as Q1;
S101: produce randomly a series of initial values as the parent based on the distribution areas of logistics transportation personnel;
S102: calculate the best route of each logistics transportation personnel within their distribution area through tabu search algorithm and add up the sum of all logistics transportation routes;
S103: Calculate if the time surpasses the longest operation time T0, transfer to S106 if yes, and transfer to S104 if no;
S104: Conduct exchange operation on individuals within the group based on the exchange probability P1;
S105: Conduct variation operation on individuals within the group based on the variation probability Q1 and jump to S102;
S106: Compare the current logistics operation route sum with the best historical route sum, adopt the current operation result and replace the best historical route if the current logistics operation route is superior to the best historical route, otherwise, adopt the best historical route.

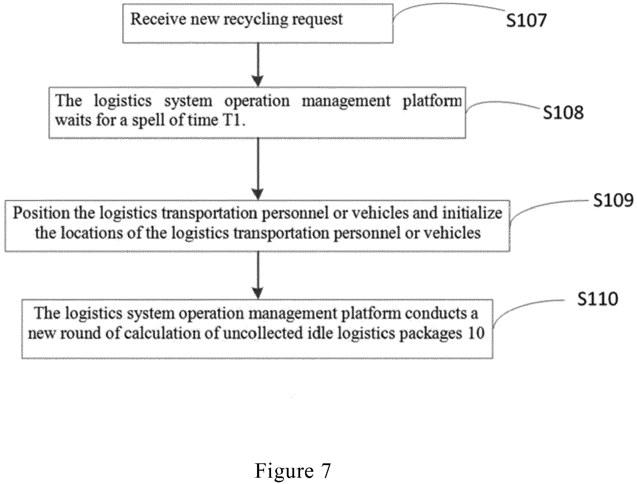

Further, please refer to Figure 7 together; within the time range of the receiving operation of the logistics transportation, the user always performs the operation of sending or recycling idle logistics packages 10 within the working time range; thus, within the time range of the logistics transportation operation, the receiving route calculation method needs to be updated at any time. Its flow is as follows:
S107: Receive new recycling request;
S108: The logistics system operation management platform waits for a spell of time T1;
S109: Position the logistics transportation personnel or vehicles and initialize the locations of the logistics transportation personnel or vehicles;
S110: The logistics system operation management platform conducts a new round of calculation of uncollected idle logistics packages 10.

In the above-mentioned receiving route optimization calculation method, the logistics system operation management platform can be deployed in a distributed manner on multiple hosts of operational capability to improve operational efficiency; in the historical best results comparison, it can implement distributed locking, meanwhile, only one algorithm can validate the comparison and exchange operations with the historical best results.

In this execution mode, the delivery route optimization refers to the allocation of delivery addresses after the logistics system operation management platform acquires the delivery request from the logistics storage center, and the planning of the optimization algorithm for the best delivery route; the best delivery route refers to the planned delivery route of the shortest total mileages for the whole system, and to the delivery route of the shortest distance for an individual logistics transportation process. The optimization algorithm of delivery route is same with that of the receiving route; its workflow is the same with that of the optimization algorithm of the receiving route; related parameters are set based on the situation of delivery time.

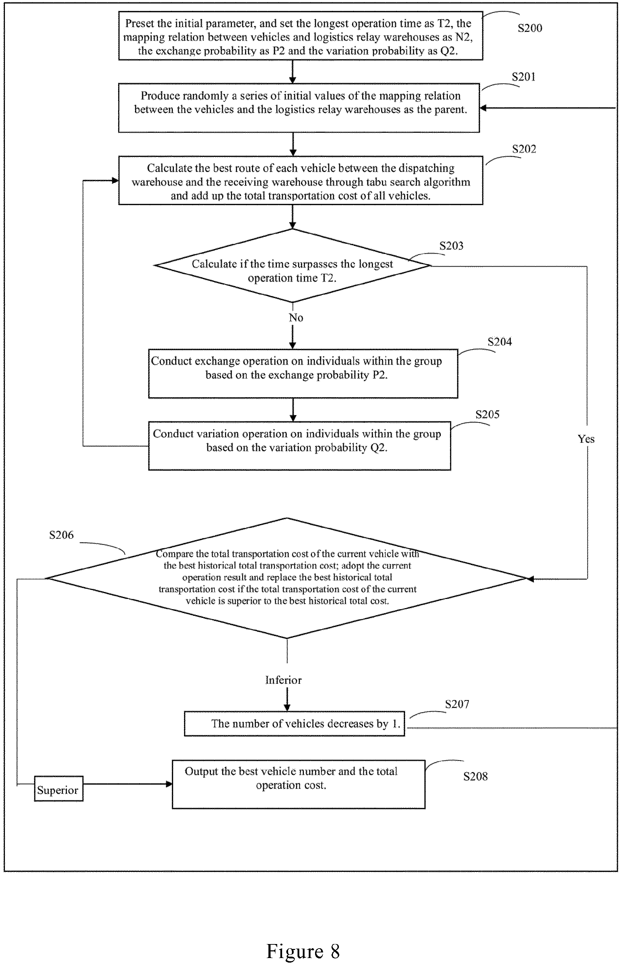

Please refer to Figure 8 together; in this execution mode, the optimization of logistics routes between urban areas refer to the application of route optimization algorithm for collecting cargoes in different logistics relay warehouses within the same urban area and delivering them to logistics relay warehouses of other urban areas; the purpose of this optimization algorithm is to minimize the number of vehicles used in different urban areas, and make each vehicle realize their maximum carrying capacity to further improve the transport efficiency and reduce transport cost. The flow of optimization algorithm for the logistics routes between urban areas is as follows:
S200: Preset the initial parameter, and set the longest operation time as T2, the mapping relation between vehicles and logistics relay warehouses as N2, the exchange probability as P2 and the variation probability as Q2;
S201: Produce randomly a series of initial values of the mapping relation between the vehicles and the logistics relay warehouses as the parent;
S202: Calculate the best route of each vehicle between the dispatching warehouse and the receiving warehouse through tabu search algorithm and add up the total transportation cost of all vehicles;
S203: Calculate if the time surpasses the longest operation time T2, transfer to S206 if yes, and transfer to S204 if no;
S204: Conduct exchange operation on individuals within the group based on the exchange probability P2;
S205: Conduct variation operation on individuals within the group based on the variation probability Q2 and jump to S202;
S206: Compare the total transportation cost of the current vehicle with the best historical total transportation cost; adopt the current operation result, replace the best historical total transportation cost and transfer to S208 if the total transportation cost of the current vehicle is superior to the best historical total cost; otherwise, transfer to S207;
S207: Transfer to S201 if the number of vehicles decreases by 1;
S208: Output the best vehicle number and the total operation cost.

Wherein, the total cost of vehicles includes fuel consumption, empty case rate, number of drivers, number of vehicles, etc. The current total cost of vehicle transportation and the best historical transportation total cost are compared under the conditions of the same issue warehouse and the same transportation weight. A certain deviation is obtained during the comparison process, and should be adjusted and amended according to the freight overload regulations.

In conclusion, the Internet of Things packaging management system and method of this invention realizes indoor and outdoor real-time positioning, tracking and monitoring of cargoes and logistics packages 10 during the logistics process, improves cargo security and can implement directional collection of required data information. The intelligent cargo sorting based on the logistics directions of cargoes and logistics packages 10 optimizes the loading of cargoes and logistics packages 10, and the piling problems during the distribution process, which further decreases labor error rate and labor cost, and prevents "rough sorting"; the logistics packages 10 can be recycled for reuse, which greatly reduces the package wastes, saves paper and protects the environment; the user information, logistics transportation information and corresponding cargo information related to the logistics package 10 are stored on the logistics system operation management platform through information binding; and the privacy information of the sender and the receiver as well as the cargo information is not exposed on the outer surface of the logistics package 10, to improve information security; the receiving and collecting routes and the recycling and reusing route of logistics packages 10 are optimized based on real-time positioning of the cargoes and logistics packages 10 and the package receiving and sending requirements, to realize reasonable allocation of resources and reduce the operation cost.

In the description of this instruction book, the reference terms of "an execution mode", "some execution modes", "schematic execution mode", "example", "specific example" or "some examples" imply that the specific features, structures, materials or characteristics described under the mentioned execution modes or examples are included in at least one execution mode or example of this invention In this instruction book, the schematic expression of the above mentioned terms does not necessarily refer to the same execution mode or example. Moreover, the specific features, structures, materials or characteristics described can be combined properly in one or multiple execution mode(s) or example(s).

Though the execution modes of this invention have been demonstrated and described, ordinary technical personnel in this field can understand that: These execution modes can be put under various changes, revisions, substitutions and modifications on the basis of not departing from the spirit and scope of the inventions; the range of this invention is defined by the claims and their equivalents.

## Claims

1. A kind of Internet of Things packaging management system, **characterized by** comprising:
the logistics package designed with an information label which is used for writing in the identity information of the logistics package;
the positioning module which is used for the real-time positioning of the above mentioned logistics package, and comprises the Satellite positioning system (with particular reference to Beidou satellite positioning system), the base station and the Beidou positioning module set, wherein the Beidou positioning module set is designed on the logistics package, the Beidou satellite positioning system connects to the signal amplifier through the satellite signal network, and the signal amplifier connects wirelessly to the Beidou positioning module set;
the information reading device which is used for reading and sending the information label and providing the location information of this device;
the logistics system operation management platform which is used for receiving the identity information sent by the information reading device and the location information of this device, and also used for receiving the real-time location information of the logistics package sent by the positioning module and conducting data analysis and disposal of the identity information and the real-time location information based on the recycling request to gain the best collection route information for the idle logistics package; and
the requesting end which is used for sending the recycling request to the logistics system operation management platform and receiving the best collection route information sent by this platform.

2. A kind of Internet of Things packaging management system according to Claim 1, **characterized in that** the information reading device includes information input module, reading module, Beidou positioning module and wireless communication module; the information input module is used for inputting the user information, commodity information, and logistics address information; the reading module is used to read the identity information; the Beidou positioning module is used for conducting real-time position of the information reading device; and the wireless communication module connects to the logistics system operation management platform.

3. A kind of Internet of Things packaging management system according to Claim 2, **characterized in that** the information label is a RFID label and the reading module is a RFID reader.

4. A kind of Internet of Things packaging management system according to Claim 2 or Claim 3, **characterized in that** the information reading device is designed at logistics conveyances, logistics relay warehouse, and recollection terminal; the logistics conveyances and the recollection terminal are designed with low-frequency RFID reader; the logistics relay warehouse is designed with high-frequency RFID readers; the collection terminal is designed with package storing modules for the storage of idle logistics packages recycled.

5. A kind of Internet of Things packaging management system according to Claim 4, **characterized in that** the requesting end includes the mobile client terminal and the collection terminal; the mobile client terminal can also be used to deliver sending request to the logistics system operation management platform and receive the feedback from this platform; the collection terminal can also be used to deliver sending request to the logistics system operation management platform and receive the feedback from this platform.

6. A kind of Internet of Things packaging management system according to Claim 1, **characterized in that** the logistics package includes the packaging-case main body and an agraffe; the side plate of the packaging-case main body can be folded outward; the bottom plate of the packaging-case main body can be folded concavely inward; the top plate of the packaging-case main body is designed with the agraffe.

7. A kind of Internet of Things packaging management system according to Claim 1 or 6, **characterized in** the logistics package is made of recycled plastic materials.

8. A kind of Internet of Things packaging management system according to Claim 1 or 6, **characterized in that** the logistics packages are in modular dimensions and logistics packages with different dimensions can form into stable stacked combinations.

9. A kind of Internet of Things packaging management method, **characterized by** comprising:
the labelling of the logistics package to write identification information of the logistics package into the information label;
the positioning of the logistics package on which the Beidou positioning module set is designed, effects real-time positioning of the logistics package through the Beidou satellite positioning system, and sends the real-time location information of the logistics package to the logistics system operation management platform;
the binding of information wherein the information reading device reads the information of the information label, sends the identity information to the logistics system operation management platform, and conducts matched binding between the identification information and real-time location information; and
optimization of receiving route wherein based on the recycling request sent by the requesting end, the logistics system operation management platform conducts analysis and disposal of the identification information and location information received to gain the best collection route information of the idle logistics package and sent the best collection route information to the requesting end.

10. The Internet of Things packaging management method according to Claim 9, **characterized in that** when the requesting end delivers sending request to the logistics system operation management platform, based on the sending request, this platform will identify if there is any idle logistics package around the location of the sender to match with the dimensions of the cargo.

11. The Internet of Things packaging management method according to Claim 10, **characterized in that** the optimization of the receiving route includes the following aspects:
S100: preset the initial parameter and set the longest operation time as T0, the mapping relation between the logistics transportation personnel and the receiving address as N1, the exchange probability as PI and the variation probability as Q1;
S101: produce randomly a series of initial values as the parent based on the distribution areas of logistics transportation personnel;
S102: calculate the best route of each logistics transportation personnel within their distribution area through tabu search algorithm and add up the sum of all logistics transportation routes;
S103: calculate if the time surpasses the longest operation time T0, transfer to S106 if yes, and transfer to S 104 if no;
S104: conduct exchange operation on individuals within the group based on the exchange probability P1;
S105: conduct variation operation on individuals within the group based on the variation probability Q1 and jump to S102;
S106: compare the current logistics operation route sum with the best historical route sum, adopt the current operation result and replace the best historical route if the current logistics operation route is superior to the best historical route, otherwise, adopt the best historical route.

12. The Internet of Things packaging management method according to Claim 11, **characterized in that** the optimization of the receiving route also includes the following aspects:
S107: receive new recycling request;
S108: rhe logistics system operation management platform waits for a spell of time T1;
S109: position the logistics transportation personnel or vehicles and initialize the locations of the logistics transportation personnel or vehicles;
S110: the logistics system operation management platform conducts a new round of calculation of uncollected idle logistics packages.

13. The Internet of Things packaging management method according to Claim 12, **characterized in that** the Internet of Things packaging management method includes also the optimization of logistics routes between urban areas; the optimization of logistics routes between urban areas covers also the following aspects:
S200: preset the initial parameter, and set the longest operation time as T2, the mapping relation between vehicles and logistics relay warehouses as N2, the exchange probability as P2 and the variation probability as Q2;
S201: produce randomly a series of initial values of the mapping relation between the vehicles and the logistics relay warehouses as the parent;
S202: calculate the best route of each vehicle between the dispatching warehouse and the receiving warehouse through tabu search algorithm and add up the total transportation cost of all vehicles;
S203: calculate if the time surpasses the longest operation time T2, transfer to S206 if yes, and transfer to S204 if no;
S204: conduct exchange operation on individuals within the group based on the exchange probability P2;
S205: conduct variation operation on individuals within the group based on the variation probability Q2 and jump to S202;
S206: compare the total transportation cost of the current vehicle with the best historical total transportation cost; adopt the current operation result, replace the best historical total transportation cost and transfer to S208 if the total transportation cost of the current vehicle is superior to the best historical total cost; otherwise, transfer to S207;
S207: transfer to S201 if the number of vehicles decreases by 1;
S208: output the best vehicle number and the total operation cost.
